(19) Europäisches Patentamt
European Patent Office
Office européen des brevets

(11) **EP 1 918 174 B1**

(12) **EUROPEAN PATENT SPECIFICATION**

(45) Date of publication and mention
of the grant of the patent:
**24.11.2010 Bulletin 2010/47**

(51) Int Cl.:
**B62D 3/12** (2006.01)

(21) Application number: **07021215.4**

(22) Date of filing: **30.10.2007**

(54) **Electric power steering system**

Elektrische Servolenkung

Système de direction fonctionnant à l'énergie électrique

(84) Designated Contracting States:
**DE GB**

(30) Priority: **01.11.2006 JP 2006297498**

(43) Date of publication of application:
**07.05.2008 Bulletin 2008/19**

(73) Proprietor: **Honda Motor Co., Ltd.**
**Minato-ku**
**Tokyo 107-8556 (JP)**

(72) Inventors:
• **Shimizu, Yasuo**
**Wako-shi**
**Saitama, 351-0193 (JP)**
• **Watanabe, Katsuji**
**Wako-shi**
**Saitama, 351-0193 (JP)**
• **Yoneda, Atsuhiko**
**Wako-shi**
**Saitama, 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**EP-A- 1 640 467      DE-A1-102004 030 349**
**GB-A- 2 211 156      US-A- 4 577 715**
**US-A- 5 265 691**

## Description

BACKGROUND OF THE INVENTION

### 1. Field of the Invention

The present invention relates to an electric power steering system in which a steering wheel and a rack-and-pinion type gear box are connected together by a steering shaft, a steering torque that is inputted into the steering wheel is detected by a magnetostriction torque sensor, and a steering actuator is driven according to a steering torque so detected so as to assist the driver to perform a steering operation.

### 2. Description of Related Art

A technique is known in J.P-A-2006-7931 in which a steering torque that is inputted into a steering wheel is detected by a magnetostriction torque sensor, so as to calculate a target torque that is to be generated in a motor of an electric power steering system based on the steering torque so detected. The magnetostriction torque sensor includes a magnetostriction membrane which is formed on an outer circumference of a pinion shaft in such a manner as to have a magnetic anisotropy and a coil which surrounds an outer circumference of the magnetostriction membrane, so as to detect a steering torque that is transmitted to the pinion shaft by detecting a magnetic permeability of the magnetostriction membrane which varies according to strain generated in the pinion shaft as the shaft is twisted as a change in inductance of the coil.

Incidentally, with the electric power steering system described in JP-A-2006-7931 above, since the magnetostriction torque sensor is provided on the pinion shaft of the rack-and-pinion type gear box, there has been a problem inherent therein that the detection accuracy is decreased for reasons below.

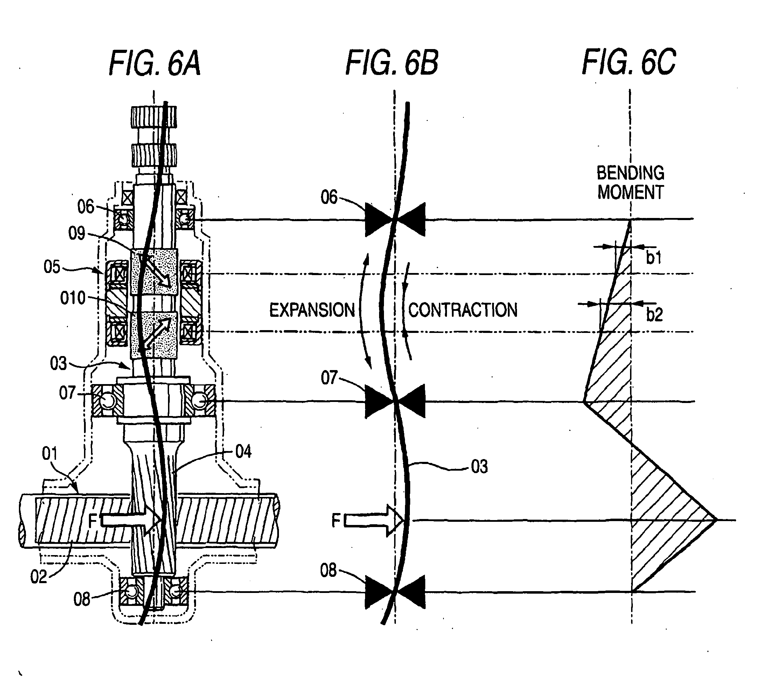

Namely, in Fig. 6, a pinion 04 formed at a lower end of a pinion shaft 03 is in mesh engagement with a rack 02 formed on a rack bar 01 of a steering gear box, and a magnetostriction torque sensor 05 is provided above the pinion 04 of the pinion shaft 03. The pinion shaft 03 is supported by an upper ball bearing 06, an intermediate ball bearing 07 and a lower ball bearing 08, and the magnetostriction torque sensor 05 is provided between the upper ball bearing 06 and the intermediate ball bearing 07, while the pinion 04 is provided between the intermediate ball bearing 07 and the lower ball bearing 08.

When a steering torque is transmitted from a steering wheel to the pinion shaft 03 and a reaction force F is applied to the pinion 04 from the rack 02, this reaction force F generates a bending moment which functions to curve the pinion shaft 3, which is supported by the upper ball bearing 06, the intermediate ball bearing 07 and the lower ball bearing 08, into an S shape. As a result, in addition to strains generated in first and second magnetostriction membranes 09, 010 due to twist generated in the pinion shaft 03 by the steering torque applied thereto, strains are also generated in the first and second magnetostriction membranes 09, 010 due to the bending of the pinion shaft 03 that is caused by the bending moment applied thereto. Moreover, since the magnitudes b1, b2 of the bending moment at the positions of the first and second magnetostriction membranes 09, 010 are not uniform, there has also been caused a problem that the detection accuracy of the magnetostriction torque sensor 05 is decreased due to a difference between the different magnitudes of the bending moment.

DE 10 2004 030 349 A1 discloses a power steering system, in accordance with the preamble part of claim 1 that contains a torque sensor for sensing a steering torque, which is provided on the upper steering shaft. There is nothing said on the nature of the torque sensor, whether it is realized as a magnetostriction torque sensor or by other means. The basic problems underlying the resent invention and related to a magnetostriction torque sensor are not addressed therein.

US 5,265,691 discloses a magnetostriction torque sensor that is provided on the pinion shaft inside the gear box.

US 4,577,715 discloses a torque detector for detecting the torque, applied to the steering wheel, which is positioned on the upper steering shaft. There is no disclosure regarding the way the torque detector is implemented. The torque sensor is not connected to the vehicle body in a floating manner, and seems to be rather fixed to the upper steering shaft.

GB 2 211 156 A discloses a torque sensor for sensing a steering torque, formed on the upper steering shaft. The steering torque sensor is not a magnetostriction torque sensor.

EP 1 640 467 A1 discloses a torque sensor provided on the upper steering shaft of a power steering system, realized as an angle sensor that measures the rotational displacement between the input and output shafts. For performing an accurate angle measure the sensor has to be placed fixedly on the torsion bar. Furthermore, the document addresses a completely different objective than the present invention, namely to provide a steel bar for a steering rack with excellent impact resistance.

SUMMARY OF THE INVENTION

The invention has been made in view of the situations described above, and an object thereof is, in an electric power steering system which includes a magnetostriction torque sensor, to suppress the effect of a bending moment applied to a pinion shaft of a steering gear box on the detection accuracy of the magnetostriction torque sensor to a minimum level.

With a view to attaining the object, according to an aspect of the invention, there is provided an electric power steering system in accordance with claim 1.

Preferably, the electric power steering system of the invention includes a housing for accommodating the magnetostriction torque sensor therein, wherein the housing is supported on a vehicle body in a floating fashion via an elastic supporting member.

Furthermore, it is preferable that the housing which accommodates the magnetostriction torque sensor therein is provided with a pin; and that the elastic support member comprises:

an outer tube fixed to a vehicle body;
an inner tube;
an elastic portion which connects the outer tube with the inner tube; and

wherein the pin of the housing is inserted into the inner tube of the elastic support member so that the housing is supported to the vehicle body in a floating fashion by sliding the pin relative to the inner tube and deformation of the elastic portion.

In addition, it is preferable that the steering shaft comprises an upper steering shaft and a lower steering shaft,
the upper steering shaft is connected to the pinion shaft via a plurality of universal joints, and
the magnetostriction torque sensor is being either provided on the upper steering shaft or on the lower steering shaft.

Note that an upper steering shaft 12 and a lower steering shaft 14 in an embodiment of the invention, which will be described below, correspond to a steering shaft of the invention, and that an upper universal joint 13 and a lower universal joint 15 in the embodiment correspond to a universal joint of the invention.

According to the invention, since the magnetostriction torque sensor is provided on the steering shaft, while being supported on the vehicle body in a floating fashion, even in the event that a slight bending moment is applied to the steering shaft where the magnetostriction torque sensor is provided from the pinion shaft of the steering gear box, the application of the bending moment to the magnetostriction torque sensor is made difficult to occur, thereby making it possible to suppress the decrease in accuracy with which a steering torque is detected.

With a view to attaining the object of the invention, according to a second aspect, there is provided an electric power steering system comprising:

a steering wheel;
a rack-and-pinion steering gear box comprising a pinion shaft;
a steering shaft having an upper steering shaft and a lower steering shaft, the steering shaft connecting the steering wheel with the steering gear box;
a magnetostriction torque sensor which detects a steering torque that is inputted into the steering wheel; and
a steering actuator which assists steering operation of a driver in accordance with the detected steering torque,
wherein a first universal joint is disposed between the lower steering shaft,
and the pinion shaft of the steering gear box, and a second universal joint is disposed between the upper steering shaft and the lower steering shaft; and the magnetostriction torque sensor is provided on the lower steering shaft.

According to the second aspect of the invention, since the lower steering shaft is separated both from the pinion shaft and the upper steering shaft by each a universal joint, neither the bending moment induced by the reaction force occurring in the pinion, nor the bending moment caused by the steering operation of the steering wheel affects the torque sensor placed on the lower steering shaft.

A magnetostriction torque sensor, placed as disclosed in this invention, on the steering shaft in a floating manner or between the first and the second universal joint, will not receive any influence of the bending moment from the steering wheel or the pinion and thus, will maintain a high detection accuracy in detecting a steering torque.

BRIEF DESCRIPTION OF THE DRAWINGS

Fig. 1 is a drawing showing an overall construction of an electric power steering system according to a first embodiment;
Fig. 2 is an enlarged sectional view taken along the line II-II in Fig. 1 and viewed in a direction indicated by arrows at ends of the line;
Fig. 3 is an enlarged view of a portion indicated by reference numeral III in Fig. 1;
Fig. 4 is a diagram showing changing characteristics of a torque detection signal relative to a steering torque;
Fig. 5 is a drawing showing an overall construction of an electric power steering system according to a second embodiment; and
Fig. 6 is a drawing which illustrates a problem inherent in a conventional electric power steering system.

DETAILED DESCRIPTION OF THE PREFERED EMBODIMENTS

Hereinafter, embodiments of the invention will be described below based on the accompanying drawings.

[First Embodiment]

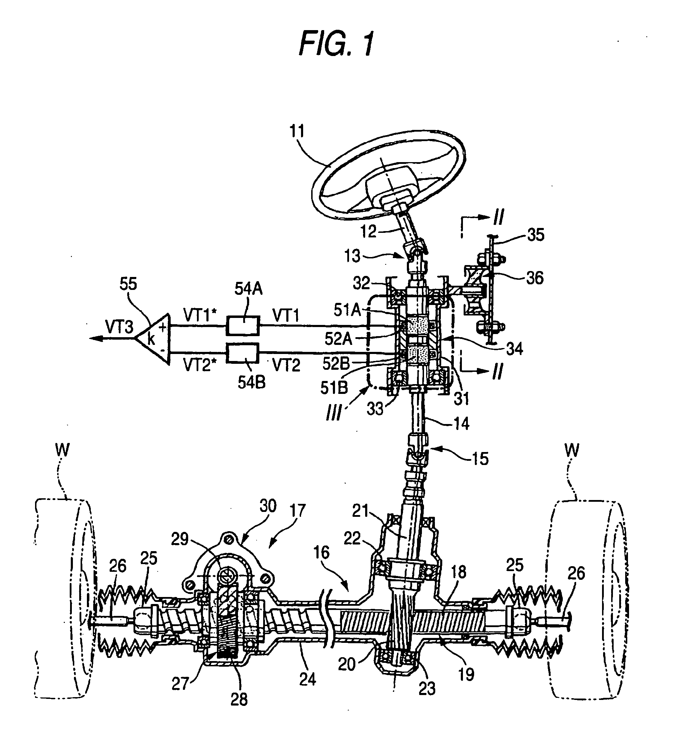

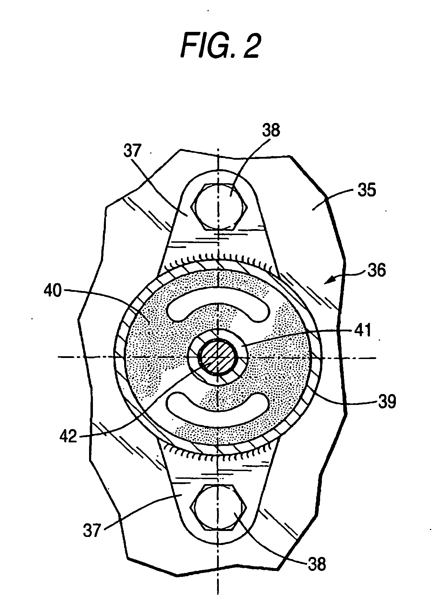

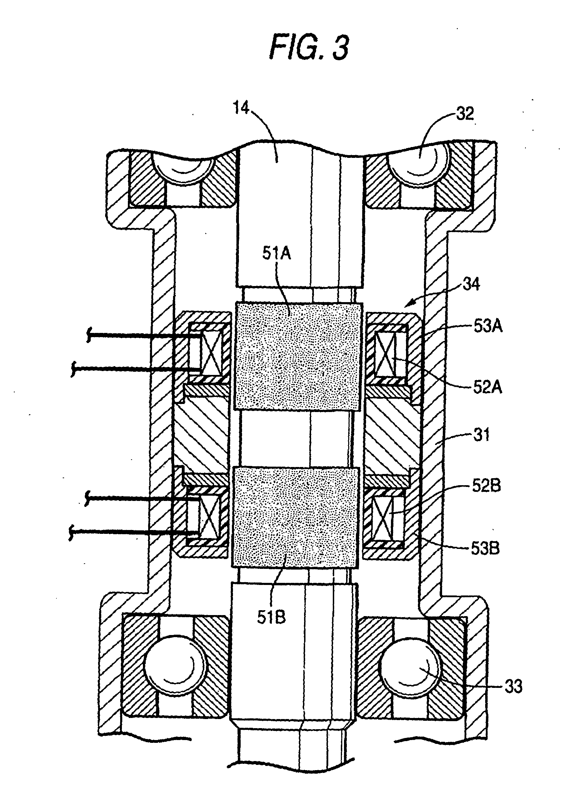

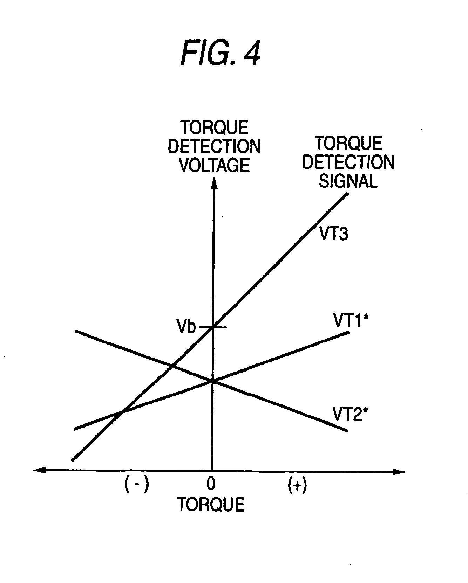

Figs. 1 to 4 are such as to show a first embodiment of the invention, of which Fig. 1 is a drawing showing an overall construction of an electric power steering system, Fig. 2 is an enlarged sectional view taken along the line II-II in Fig. 1 and viewed in a direction indicated by arrows at ends of the line, Fig. 3 is an enlarged view of a portion indicated by reference numeral 3 in Fig. 1, and Fig. 4 is a diagram showing changing characteristics of a torque detection signal relative to a steering torque.

As is shown in Fig. 1, an electric power steering system of a motor vehicle includes an upper steering shaft 12 which is adapted to rotate together with a steering wheel 11, a lower steering shaft 14 which is connected to the upper steering shaft 12 via an upper universal joint 13, a rack-and-pinion steering gear box 16 which is connected to the lower steering shaft 14 via a lower universal joint 15 and a steering actuator 17 provided in the steering gear box 16.

The steering gear box 16 includes a rack bar 19 on which a rack 18 is formed, a pinion shaft 21 which has a pinion 20 which is brought into mesh engagement with the rack 18 and which is connected to the lower universal joint 15, and a housing 24 which supports the rack bar 19 in such a manner as to slide transversely and supports the pinion shaft 21 via a pair of ball bearings 22, 23 at positions which hold the pinion therebetween. Left and right ends of the rack bar 19 are connected to left and right road wheels W, W via left and right ball joints 25, 25 and left and right tie-rods 26, 26.

The steering actuator 17 includes a ball screw mechanism 27 which is disposed on an outer circumference of the rack bar 19, a worm wheel 28 which is adapted to rotate together with a nut member of the ball screw mechanism 27, a worm 29 which meshes with the worm wheel 28 and a motor 30 for rotationally drive the worm 29.

The lower steering shaft 14 is rotatably supported via a pair of upper and lower ball bearings 32, 33 in an interior of a cylindrical housing 31, and a magnetostriction torque sensor 34 is provided between both the ball bearings 32, 33. The housing 31 is supported on a vehicle body 35 via an elastic supporting member 36 in a floating fashion.

As is obvious when also referring to Fig. 2, the elastic supporting member 36 includes an outer tube 39 which is fixed to the vehicle body 35 by fastening brackets 37, 37 to the vehicle body 35 with bolts 38, 38 and an inner tube 41 which is connected to an inner circumference of the outer tube 39 via a rubber bush (elastic portion) 40, and a pin 42 which is provided on the housing 31 is inserted into the inner tube 41. By this construction, the housing accommodating the magnetostriction torque sensor 34 is supported on the vehicle body 35 in a floating fashion by virtue of elastic deformation of the rubber bush 40 and sliding of the pin 42 relative to the inner tube 41 while restraining the lower steering shaft 14 on its axial and radial movements.

The magnetostriction torque sensor 34 for detecting a steering torque that is inputted into the steering wheel 11 includes first and second magnetostriction membranes 51A, 51B which are made of, for example, Ni-Fe plating, a first coil 52A which surrounds the first magnetostriction membrane 51A, a second coil 52B which surrounds the second magnetostriction membrane 51B, a first yoke 53A which surrounds the first coil 52A and a second coil 53B which surrounds the second coil 52B. First and second output selection circuits 54A, 54B and a differential amplifier circuit 55 are connected to the first coil 52A and the second coil 52B, respectively.

Next, the function of the embodiment of the invention which has the configuration described heretofore will be described below.

When the driver steers the steering wheel 11, the rotation of the steering wheel 11 is transmitted to the tie-rods 26, 26 via the upper steering shaft 12, the upper universal joint 13, the lower steering shaft 14, the lower universal joint 15, the pinion shaft 21, the pinion 20, the rack 18, the rack bar 19 and the ball joints 25, 25, whereby the left and right road wheels W, W are turned.

As this occurs, when a steering torque that is inputted into the steering wheel 11 by the driver is detected by the magnetostriction torque sensor 34 provided on the periphery of the lower steering shaft 14, an electronic control unit, not shown, drives the motor 30 of the steering actuator 17 according to the steering torque so detected, and the torque of the motor 30 is transmitted to the worm 29, the worm wheel 28 and the ball screw mechanism 27, whereby the steering operation being performed by the driver is assisted by the steering actuator 17.

The detection of a steering torque by the magnetostriction torque sensor 34 is implemented in the following manner.

When an alternating current is supplied to the first and second coils 52A, 52B, with the steering torque inputted into the lower steering shaft 14, an inductance of the first magnetostriction membrane 51A is changed from L to L+$\Delta$, and an inductance of the second magnetostriction membrane 51B is changed from L to L-$\Delta$. Moreover, since the variation $\Delta L$ is proportional to the steering torque applied, this variation $\Delta L$ is detected by the first and second coils 52A, 52B.

Namely, in Fig. 4, a first voltage signal VT1 outputted by the first coil 52A and a second voltage signal VT2 outputted by the second coil 52B are inputted, respectively, into the first and second output selection circuits 54A, 54B which each function as a rectifying circuit. The first and second output selection circuits 54A, 54B outputs first and second voltage signals VT1*, VT2* which correspond, respectively, to the first and second voltage signals VT1, VT2, and the first and second voltage signals VT1*, VT2* are inputted into the differential amplifier circuit 55, where a third voltage signal (a torque detection signal) which corresponds to the magnitude of the steering torque is calculated for output.

Specifically, the differential amplifier circuit 55 multiplies VT1* - VT2*, which is obtained by subtracting the second signal voltage VT2* from the first signal voltage VT1*, by a gain "k" to calculate the third voltage signal (the torque detection signal). Since the first signal voltage VT1* increases as the steering torque increases, while the second signal voltage VT2* decreases as the steering torque increases, the third voltage signal increases as the steering torque increases. When the steering torque is zero, the third voltage signal is biased so as to attain a predetermined bias voltage Vb (for example, 2.5V).

$$VT3 = (VT1* - VT2*) + Vb$$

When the lower steering shaft 14 is twisted to be deformed together with the first and second magnetostriction membranes 51A, 51B by the steering torque inputted into the steering wheel 11, a magnetic flux density along two magnetic paths which are made up of the first and second magnetostriction membranes 51A, 51B and the first and second yokes 53A, 53B is changed, whereby the steering torque can be detected based on the change in magnetic flux density.

Incidentally, when the steering torque inputted into the steering wheel 11 is transmitted to the pinion shaft 21, as has already been described by reference to Fig. 6, the pinion 20 receives a reaction force F from the rack 18, whereby a bending moment is generated in the pinion shaft 21. In this embodiment, however, the lower universal joint 15 is disposed between the pinion shaft 21 to which the bending moment is applied and the lower steering shaft 14. In addition, the upper universal joint 13 is disposed between the lower steering shaft 14 and the upper steering shaft 12. Therefore, there is no case where the bending moment is transmitted to the lower steering shaft 14 where the magnetostriction torque sensor 34 is provided. As a result, the generation of expansion and contraction attributed to the bending moment in the first and second magnetostriction membranes 51A, 51B which are formed on the surface of the lower steering shaft 14 is prevented, while only the twisted deformation attributed to the steering torque is allowed to be generated in the first and second magnetostriction membranes 51A, 51B, whereby the detection accuracy can be secured.

In addition, even in the event that a light load is applied to the lower steering shaft 14 from the pinion shaft 21 to which the bending moment is applied via the lower universal joint 15, since the housing 31 which supports the lower steering shaft 14 is supported on the vehicle body 35 via the elastic supporting member 36 in the floating fashion, the transmission of the bending moment to the lower steering shaft 14 can be prevented in a more ensured fashion.

[second Embodiment]

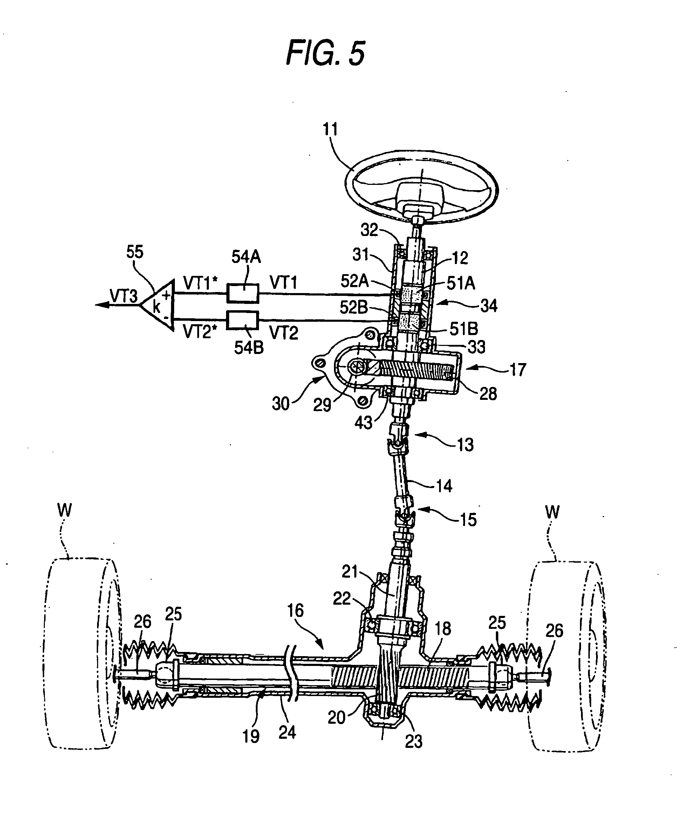

Next, a second embodiment of the invention will be described below based on Fig. 5.

While in the first embodiment, the magnetostriction torque sensor 34 is provided on the lower steering shaft 14 and the steering actuator 17 is provided in the steering gear box 16, in the second embodiment, both a magnetostriction torque sensor 34 and a steering actuator 17 are provided on an upper steering shaft 12. The upper steering shaft 12 is supported via two ball bearings 32, 33, which are those used in the first embodiment, and an additional ball bearing 43.

The construction of the magnetostriction torque sensor 34 is the same as that of the magnetostriction torque sensor 34 of the first embodiment. However, a housing therefor is not supported on a vehicle body 35 via an elastic supporting member 36 in a floating fashion but is fixed to the vehicle body 35. The steering actuator 17 is made up of a worm wheel 28 which is fixed to the upper steering shaft 12, a worm 29 which is adapted to mesh with the worm wheel 28 and a motor 30 which rotationally drives the worm 29.

Also with this second embodiment, even in the event that a bending moment is applied to a pinion shaft 21 due to a reaction force which a pinion 20 receives from a rack 18, since two universal joints, a lower universal joint 15 and an upper universal joint 13, are interposed between the pinion shaft 21 and the upper steering shaft 12, the transmission of the bending moment from the pinion shaft 21 to the upper steering shaft 12 where the magnetostriction torque sensor 34 is provided is prevented, thereby making it possible to secure the detection accuracy of the magnetostriction torque sensor 34.

Moreover, while in the first embodiment, the one universal joint (the lower universal joint 15) is disposed between the pinion shaft 21 and the magnetostriction torque sensor 34, in the second embodiment, since the two universal joints (the lower universal joint 15 and the upper universal joint 13) are disposed between the pinion shaft 21 and the magnetostriction torque sensor 34, the transmission of the bending moment which is being applied to the pinion shaft 21 to the magnetostriction torque sensor 34 can be made more difficult to occur.

Thus, while the embodiments of the invention have been described heretofore, the invention can be modified variously on its design without departing from the spirit and scope thereof.

For example, while in the embodiments, the steering actuator 17 is provided on the rack bar 19 or the upper steering shaft 12, the steering actuator 17 can be provided on the lower steering shaft 14 or the pinion shaft 21.

In the first embodiment, there is employed the elastic support member 36 to connect the housing 31 with the vehicle body 35. However, as long as connect them in a floating fashion, any elastic member or elastic structure can be employed as the elastic supporting member. The detailed constitution of the elastic support member 36 is just an example.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the scope of the present invention.

**Claims**

1. An electric power steering system comprising:

   a steering wheel (11);
   a rack-and-pinion steering gear box (16) comprising a pinion shaft (21);
   a steering shaft connecting the steering wheel (11) with the steering gear box (16);
   a torque sensor (34) which detects a steering torque that is inputted into the steering wheel (11); and
   a steering actuator (17) which assists steering operation of a driver in accordance with the detected steering torque,
   wherein a universal joint (15) is disposed between the steering shaft and a pinion shaft (21) of the steering gear box (16), and
   the torque sensor (34) is provided on the steering shaft,
   **characterized in**
   **that** the torque sensor is a magnetostriction torque sensor (34), and
   **that** the magnetostriction torque sensor (34) is supported on a vehicle body (35) in a floating fashion.

2. The electric power steering system as set forth in Claim 1, further comprising a housing (31) for accommodating the magnetostriction torque sensor (34) therein, wherein the housing (31) is supported on a vehicle body (35) in a floating fashion via an elastic supporting member (36).

3. The electric power steering system as set forth in Claim 1, wherein
   said housing (31) which accommodates the magnetostriction torque sensor (34) therein is provided with a pin (42); and
   said elastic support member (36) comprises
   an outer tube (39) fixed to said vehicle body (35);
   an inner tube (41);
   an elastic portion (40) which connects the outer tube (39) with the inner tube (41); and
   wherein the pin (42) of the housing (31) is inserted into the inner tube (39) of the elastic support member (36) so that the housing (31) is supported to the vehicle body (35) in a floating fashion by sliding the pin (42) relative to the inner tube (41) and deformation of the elastic portion (40).

4. The electric power steering system as set forth in Claim 1, wherein
   the steering shaft comprises an upper steering shaft (12) and a lower steering shaft (14),
   the upper steering shaft (12) is connected to the pinion shaft (21) via a plurality of universal joints (13,15), and
   said magnetostriction torque sensor (34) being either provided on said upper steering shaft (12) or on said lower steering shaft (14).

5. An electric power steering system comprising:

   a steering wheel (11);
   a rack-and-pinion steering gear box (16) comprising a pinion shaft (21);
   a steering shaft having an upper steering shaft (12) and a lower steering shaft (14), the steering shaft connecting the steering wheel (11) with the steering gear box (16);
   a torque sensor (34) which detects a steering torque that is inputted into the steering wheel (11); and
   a steering actuator (17) which assists steering operation of a driver in accordance with the detected steering torque,
   wherein a first universal joint (15) is disposed between the lower steering shaft (14) and the pinion shaft (21) of the steering gear box (16), and
   a second universal joint is disposed between the upper steering shaft (12) and the lower steering shaft (14),
   **characterized in**
   **that** the torque sensor is a magnetostriction torque sensor (34), and
   **that** the magnetostriction torque sensor (34) is provided on the lower steering shaft.

**Patentansprüche**

1. Elektrisches Servolenkungssystem umfassend:

   ein Lenkrad (11);
   ein Zahnstangenlenkgetriebe (16) umfassend eine Ritzelwelle (21);
   eine Lenkwelle, welche das Lenkrad (11) mit dem Lenkgetriebe (16) verbindet;
   einen Drehmomentsensor (34), welcher ein Drehmoment erfasst, das in das Lenkrad (11) eingegeben ist; und
   einen Lenkaktuator (17), welcher eine Lenkbetätigung des Fahrers gemäß dem erfassten Drehmoment unterstützt,

wobei ein Universalgelenk (15) zwischen der Lenkwelle und der Ritzelwelle (21) des Lenkgetriebes (16) angeordnet ist, und

wobei der Drehmomentsensor (34) auf der Lenkwelle bereitgestellt ist,

**dadurch gekennzeichnet,**

**dass** der Drehmomentsensor ein magnetostriktiver Drehmomentsensor (34) ist, und

**dass** der magnetostriktive Drehmomentsensor (34) auf einem Fahrzeugkörper (35) auf einer schwimmenden Weise gehalten ist.

2. Elektrisches Servolenkungssystem nach Anspruch 1, ferner umfassend ein Gehäuse (31) zur Aufnahme des magnetostriktiven Drehmomentsensors (34) darin,

wobei das Gehäuse (31) auf einem Fahrzeugkörper (35) auf einer schwimmenden Weise mittels eines elastischen Halteelementes (36) gehalten ist.

3. Elektrisches Servolenkungssystem nach Anspruch 1,

wobei das Gehäuse (31), welches den magnetostriktiven Drehmomentsensor (34) darin aufnimmt, mit einem Stift (42) vorgesehen ist; und

wobei das elastische Halteelement (36) umfasst:

ein Außenrohr (39), welches an dem Fahrzeugkörper (35) angebracht ist;

ein Innenrohr (41);

einen elastischen Abschnitt (40), welcher das Außenrohr (39) mit dem Innenrohr (41) verbindet; und

wobei der Stift (42) des Gehäuses (31) in das Innenrohr (39) des elastischen Halteelements (36) eingeführt ist, derart dass das Gehäuse (31) auf dem Fahrzeugkörper (35) auf einer schwimmenden Weise durch Gleiten des Stifts (42) relativ zum Innenrohr (41) und Deformation des elastischen Abschnitts (40) gehalten ist.

4. Elektrisches Servolenkungssystem nach Anspruch 1,

wobei die Lenkwelle eine obere Lenkwelle (12) und eine untere Lenkwelle (14) umfasst,

wobei die obere Lenkwelle (12) mit der Ritzelwelle (21) mittels einer Mehrzahl von Universalgelenken (13, 15) verbunden ist, und

wobei der magnetostriktive Drehmomentsensor (34) entweder auf der oberen Lenkwelle (12) oder auf der unteren Lenkwelle (14) bereitgestellt ist.

5. Elektrisches Servolenkungssystem umfassend:

ein Lenkrad (11);

ein Zahnstangenlenkgetriebe (16) umfassend eine Ritzelwelle (21);

eine Lenkwelle, welche eine obere Lenkwelle (12) und eine untere Lenkwelle (14) aufweist, wobei die Lenkwelle das Lenkrad (11) mit dem Lenkgetriebe (16) verbindet;

einen Drehmomentsensor (34), welcher ein Drehmoment erfasst, das in das Lenkrad (11) eingegeben ist; und

einen Lenkaktuator (17), welcher eine Lenkbetätigung des Fahrers gemäß dem erfassten Drehmoment unterstützt,

wobei ein erstes Universalgelenk (15) zwischen der unteren Lenkwelle und

der Ritzelwelle (21) des Lenkgetriebes (16) angeordnet ist, und

wobei ein zweites Universalgelenk zwischen der oberen Lenkwelle (12) und

der unteren Lenkwelle (14) angeordnet ist,

**dadurch gekennzeichnet,**

**dass** der Drehmomentsensor ein magnetostriktiver Drehmomentsensor (34) ist, und

**dass** der magnetostriktive Drehmomentsensor (34) auf der unteren Lenkwelle bereitgestellt ist.

## Revendications

1. Système de direction fonctionnant à l'énergie électrique, comprenant :

un volant (11) ;

un boîtier de direction à crémaillère (16) comprenant un arbre de pignon (21) ;

un arbre de direction raccordant le volant (11) au boîtier de direction (16) ;

un capteur de couple (34) qui détecte un couple de direction qui est introduit dans le volant (11) ; et

un actionneur de direction (17) qui assiste l'opération de direction d'un conducteur selon le couple de direction détecté,

dans lequel un joint de cardan (15) est disposé entre l'arbre de direction et un arbre de pignon (21) du boîtier de direction (16), et

le capteur de couple (34) est agencé sur l'arbre de direction,

**caractérisé en ce que :**

le capteur de couple est un capteur de couple magnétostrictif (34), et **en ce que** :

le capteur de couple magnétostrictif (34) est supporté sur un corps de véhicule (35) d'une manière flottante.

2. Système de direction fonctionnant à l'énergie électrique selon la revendication 1, comprenant en outre un boîtier (31) pour loger le capteur de couple magnétostrictif (34) à l'intérieur de ce dernier, dans lequel le boîtier (31) est supporté sur un corps de véhicule (35) d'une manière flottante à l'aide d'un élément de support élastique (36).

3. Système de direction fonctionnant à l'énergie électrique selon la revendication 1, dans lequel :

ledit boîtier (31) qui loge le capteur de couple magnétostrictif (34) à l'intérieur de ce dernier est prévu avec une broche (42) ; et
ledit élément de support élastique (36) comprend :

un tube externe (39) fixé sur ledit corps de véhicule (35) ;
un tube interne (41) ;
une partie élastique (40) qui raccorde le tube externe (39) avec le tube interne (41) ; et
dans lequel la broche (42) du boîtier (31) est insérée dans le tube interne (39) de l'élément de support élastique (36) de sorte que le boîtier (31) est supporté sur le corps de véhicule (35) d'une manière flottante en faisant coulisser la broche (42) par rapport au tube interne (41) et la déformation de la partie élastique (40).

4. Système de direction fonctionnant à l'énergie électrique selon la revendication 1, dans lequel :

l'arbre de direction comprend un arbre de direction supérieur (12) et un arbre de direction inférieur (14),
l'arbre de direction supérieur (12) est raccordé à l'arbre de pignon (21) par l'intermédiaire d'une pluralité de joints de cardan (13, 15), et
ledit capteur de couple magnétostrictif (34) étant prévu sur ledit arbre de direction supérieur (12) ou sur ledit arbre de direction inférieur (14).

5. Système de direction fonctionnant à l'énergie électrique comprenant :

un volant (11) ;
un boîtier de direction à crémaillère (16) comprenant un arbre de pignon (21) ;
un arbre de direction ayant un arbre de direction supérieur (12) et un arbre de direction inférieur (14), l'arbre de direction raccordant le volant (11) avec le boîtier de direction (16) ;
un capteur de couple (34) qui détecte un couple de direction qui est introduit dans le volant (11) ; et
un actionneur de direction (17) qui assiste l'opération de direction d'un conducteur selon le couple de direction détecté,
dans lequel un premier joint de cardan (15) est disposé entre l'arbre de direction inférieur (14) et l'arbre de pignon (21) du boîtier de direction (16), et
un deuxième joint de cardan est disposé entre l'arbre de direction supérieur (12) et l'arbre de direction inférieur (14),
**caractérisé en ce que :**

le capteur de couple est un capteur de couple magnétostrictif (34), et **en ce que** :

le capteur de couple magnétostrictif (34) est agencé sur l'arbre de direction inférieur.

EP 1 918 174 B1

# FIG. 1

FIG. 2

# FIG. 3

# FIG. 4

EP 1 918 174 B1

## FIG. 5

FIG. 6A          FIG. 6B          FIG. 6C

BENDING
MOMENT

EXPANSION    CONTRACTION

EP 1 918 174 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006007931 A
- DE 102004030349 A1
- US 5265691 A
- US 4577715 A
- GB 2211156 A
- EP 1640467 A1